# EUROPÄISCHE PATENTSCHRIFT

(11) **EP 0 943 843 B1**
(45) Veröffentlichungstag und Bekanntmachung des Hinweises auf die Patenterteilung: **08.05.2002**
(21) Anmeldenummer: 99105612.8
(22) Anmeldetag: 19.03.1999
(51) Int. Cl.: F16H 59/02

(54) **Wählvorrichtung für ein Automatikgetriebe eines Kraftfahrzeuges**
Selecting device for an automatic transmission of a vehicle
Dispositif de sélection pour une transmission automatique d'un véhicule

(30) Priorität: 19.03.1998 DE 19811972
(43) Veröffentlichungstag der Anmeldung: 22.09.1999
(73) Patentinhaber: ZF Lemförder Metallwaren AG, 49448 Lemförde (DE)
(72) Erfinder: Ersoy, Metin, Dr., 65396 Walluf (DE)

(56) Entgegenhaltungen:
- EP-A- 0 718 528
- EP-A- 0 770 799
- DE-A- 19 601 442
- US-A- 4 967 883
- US-A- 5 647 465

## Beschreibung

Die Erfindung betrifft eine Wählvorrichtung für ein Automatikgetriebe eines Kraftfahrzeuges.
In Wählvorrichtungen, die über Gestänge, Seilzüge oder andere mechanische Übertragungsglieder mit dem Kraftfahrzeuggetriebe verbunden sind, sind die zur Gangwahl aufzuwendenden Betätigungskräfte konstruktiv vorgegeben. Bei der Anwahl einer Fahrstufe muß vom Fahrzeugführer ein Widerstand überwunden werden, der ihm ein Schaltgefühl vermittelt. Das Einlegen eines Getriebeganges ist für ihn somit spürbar.
Im Gegensatz dazu werden bei elektronisch gesteuerten Wählvorrichtungen für Kraftfahrzeuggetriebe, die mechanisch von der Motor-Getriebe-Einheit entkoppelt sind, oftmals die für das Schalten aufzuwendenden Kräfte simuliert, um dem Fahrzeugführer ein Gefühl des Schaltens zu vermitteln.

Aus der gattungsgemäßen EP 0 620 385 A1 ist eine Wählvorrichtung für ein Automatikgetriebe eines Kraftfahrzeuges bekannt, die ein in einem Gehäuse um eine erste Achse schwenkbar gelagertes Kreuzstück aufweist, in dem ein um eine zweite Achse schwenkbar gelagerter Wählhebel aufgenommen ist. Die Schwenkachsen sind dabei annähernd orthogonal, jedoch räumlich versetzt zueinander angeordnet. An dem Wählhebel sind federbelastete Rastmittel vorgesehen, die mit einer ansteigenden Kontur des Kreuzstückes zusammenwirken. Die Bewegungen des Wählhebels werden über Sensoren erfaßt und in einer Steuerelektronik verarbeitet.

Aus der DE 40 29 330 A1 geht darüber hinaus eine Wähleinrichtung hervor, bei der eine um eine Achse an dem Wählhebel angelenkte und federnd gegen ein Rastglied positionierte Klinke mit einer profilierten Oberfläche versehen ist und zur Festlegung des Wählhebels in je einer der beiden Schaltgassen dient, wobei die erste Schaltgasse (Automatikschaltgasse) zur Anwahl sämtlicher Automatikschaltfunktionen, also auch des Rückwärtsganges, und die zweite Schaltgasse (Schrittschaltgasse) zum manuellen schrittweisen Schalten vorgesehen ist.

Schließlich ist in der EP 0 568 928 A1 eine Wählvorrichtung mit einem in einem Gehäuse an einem Kreuzstück schwenkbar gelagerten Wählhebel beschrieben, wobei mit dem Kreuzstück ein hülsenförmiges Teil verbunden ist, welches die Positionierung des Wählhebels in den Wähl- und Schaltgassen durch das Zusammenwirken eines in das hülsenförmige Teil eingesetzten, federbelasteten Rastmittels mit einer profilierten Oberfläche an dem Gehäuse der Wählvorrichtung ermöglicht. Ein selbsttätiges Zurückführen des Wählhebels in seine Ausgangposition geht aus der Schrift nicht hervor.

Der Erfindung liegt die technische Problemstellung zugrunde, eine Wählvorrichtung für ein Automatikgetriebe eines Kraftfahrzeuges zu schaffen, die ohne mechanische Übertragungsglieder bei einfachem Aufbau eine möglichst große Sicherheit gegen Fehlbedienungen gewährleistet und geringe Fertigungstoleranzen aufweist.

Gelöst wird diese Problemstellung mit den Merkmalen des Patentanspruches 1.

Eine erfindungsgemäße Wählvorrichtung für ein Automatikgetriebe von Kraftfahrzeugen besteht danach aus einem Gehäuse sowie aus einem in dem Gehäuse um eine erste, annähernd in Fahrzeugquerrichtung angeordnete Achse (Wählachse) schwenkbar gelagerten, multifunktionalen Kreuzstück. Das Kreuzstück ist multifunktional, weil es mehrere Funktionen innerhalb der Wählvorrichtung erfüllt.

Eine zweite Achse (Schwenkachse) ist in dem Kreuzstück gelagert und nimmt den Wählhebel in dem Kreuzstück schwenkbar auf Beide Achsen verlaufen annähernd orthogonal, sind jedoch räumlich versetzt zueinander angeordnet.
Der Wählhebel kann zur Anwahl der Automatikfahrstufen (vorliegend P, R, N, D) zusammen mit dem Kreuzstück um die erste Achse verschwenkt werden. Er ist dabei innerhalb einer Automatikschaltgasse geführt.
Erfindungsgemäß bildet wenigstens eine der Wählhebelstellungen (P, R, N, D) eine Quergasse, in der ein Verschwenken des Wählhebels um die zweite Achse, annähernd in Fahrzeugquerrichtung, möglich ist.
Zur Realisierung eines Schrittschaltbetriebes bewirkt hierbei ein manuelles, tippweises Verschwenken des Wählhebels aus einer neutralen Mittellage heraus in der einen Richtung eine Hochschaltung um einen Getriebegang und in der entgegengesetzten Richtung eine Rückschaltung um einen Getriebegang, wobei der Wählhebel jeweils selbsttätig in seine neutrale Mittellage zurückkehrt. Zur Unterstützung dieser selbsttätigen Rückführung und um dem Fahrzeugführer im Schrittschaltbetrieb ein Schaltgefühl zu vermitteln, weist der Wählhebel wenigstens einen federbelasteten Konturroller auf, der mit einer in das Kreuzstück eingearbeiteten Kontur zusammenwirkt. Unter einem Konturroller wird dabei beispielsweise ein in einem Käfig aufgenommener und darin geführter, federbelasteter Wälzkörper verstanden, der auf der Kontur abrollt. Als Wälzkörper kann dabei im einfachsten Falle eine Kugel dienen. Weiterhin ist eine federbelastete Rastierung des Kreuzstückes gegenüber dem Gehäuse vorgesehen.
Für die Realisierbarkeit der Erfindung sind voneinander unabhängige Mittel zur permanenten Erfassung von Signalen der Geschwindigkeit des Fahrzeuges, des Bremssignales und der Wählhebelstellung notwendig, wobei die Signale nach ihrer Erfassung an eine zentrale Verarbeitungseinheit (CPU) weitergeleitet werden. Die Verarbeitungseinheit steuert einen Elektromagneten, dessen aktivierter Anker unmittelbar oder mittelbar in eine Ausnehmung in dem Kreuzstück eingreift und somit die Anwahl bestimmter Fahrstufen blockiert. Bei einem unmittelbaren Eingriff wird der Anker des Elektromagneten als aktives Element genutzt, während bei einem mittelbaren Eingriff ein mit dem Anker zusammenwirkendes, zwischengeschaltetes Element den Wählhebel in den dafür vorgesehenen Stellungen sperrt.

Darüber hinaus weist eine erfindungsgemäße Wählvorrichtung Mittel auf, die unmittelbar oder mittelbar den Zündschlüssel im Zündschloß sichern, solange sich der Wählhebel in Stellungen befindet, die den Fahrstufen entsprechen, die zur Fortbewegung des Farzeuges vorgesehen sind. Ein Abziehen des Zündschlüssels ist demnach nur in der Wählhebelstellung "P" möglich, wenn zudem die Zündung des Fahrzeuges ausgeschaltet, das heißt, die Stromzufuhr unterbrochen ist. Die Verbindung zwischen Wählvorrichtung und Zündschloß kann dabei in an sich bekannter Weise über einen Seilzug oder auch über ein Gestänge hergestellt werden.
Eine Wählvorrichtung weist entsprechend der vorgeschlagenen Lösung eine den Wählhebel führende und von diesem durchsetzte Kulisse auf, die unterhalb einer oberen Gehäuseabdeckung angebracht oder in diese eingearbeitet ist. Da eine derartige Kulisse eine Öffnung in der Gehäuseabdeckung darstellt, ist es erforderlich, eine Jalousie vorzusehen, die den durch die Kulisse gebildeten Schlitz verschließt. Die Jalousie ist in einer unterhalb der Gehäuseabdeckung gelegenen Führung in dem Gehäuse synchron zu dem Wählhebel bewegbar.
Darüber hinaus ist unterhalb der Gehäuseabdeckung eine Leiterplatte mit den jeweiligen Schaltstellungen zugeordneten Signalaufnehmern eingesetzt. Unter den Signalaufnehmern werden mit dem Wählhebel Signalgeber berührungslos an den Signalaufnehmern vorbei bewegt. Die Signalgeber können dabei auf der Oberseite der Jalousie angeordnet sein. Selbstverständlich ist die umgekehrte Anordnung ebenfalls möglich. So ist es beispielsweise denkbar, die Signalgeber auf der Leiterplatte anzuordnen und die Signalaufnehmer mit dem Wählhebel an den Signalgebern vorbei zu bewegen.

Ein besonders vorteilhaftes Merkmal der Erfindung besteht in einer in das einteilig ausgeführte Kreuzstück eingeformten Verzahnung, die mit einer auf der Unterseite der Jalousie angeformten oder daran montierten, komplementären Verzahnung zusammenwirkt. Dadurch kann erreicht werden, daß die Jalousie knickfrei und sehr gleichmäßig auch über größere Distanzen hinweg geführt werden kann, was bei herkömmlichen Lösungen, infolge der oft sehr weich ausgeführten Jalousien nicht möglich ist. Darüber hinaus spielen die bei der Fertigung entstehenden Bauteil- und Fertigungstoleranzen nur noch eine untergeordnete Rolle, wenn eine derartige Verzahnung verwendet wird.

Weitere vorteilhafte Ausgestaltungen der Erfindung sind Gegenstand der Unteransprüche.

Danach weist eine erfindungsgemäße Wählvorrichtung für ein Automatikgetriebe von Kraftfahrzeugen im Automatikbetrieb lediglich 4 Fahrstufen auf, nämlich die Automatikfahrstufen D, N, R, P. Die Fahrstufen sollten dabei auch in dieser Reihenfolge angeordnet sein. Aus dieser Anordnung heraus ist verständlich, daß mehrere Sperrfunktionen des Wählhebels mit nur einem Elektromagneten realisiert werden können. Darin liegt ein erheblicher Kostenvorteil einer derartigen Lösung.

Es können Elektromagneten verwendet werden, die einen Druckanker oder einen Zuganker aufweisen. Erfindungsgemäß sind dies Elektromagnete, bei denen entweder der aktivierte Anker ein im stromlosen Zustand eingezogener Druckanker ist, oder bei denen der aktivierte Anker des Elektromagneten ein im bestromten Zustand eingezogener Zuganker ist.

Bei Verwendung eines Elektromagneten mit Zuganker durchgreift ein Hebel eine Ausnehmung des Kreuzstückes mit seinem hakenförmigen Abschnitt, sodaß das Kreuzstück in Richtung der Rückwärtsgang - Fahrstufe "R" an einem Verschwenken gehindert wird. Dies dient der Verhinderung der unbeabsichtigten Anwahl der Rückwärtsgang-Fahrstufe "R" aus den Wählhebelstellungen "N" und "D" heraus.
Während des Fahrbetriebes ist der Elektromagnet aktiviert, das bedeutet, der federbelastete Anker ist entgegen der Druckkraft einer Feder eingezogen. Die Feder dient dabei nur der selbsttätigen Ausfahrbewegung des Ankers sobald die Stromzufuhr unterbrochen wird. Der Anker wirkt mit einer Hebelmechanik zusammen, die den zuvor beschriebenen Hebel enthält. Der Hebel ist dabei um eine Achse verschwenkbar.
Selbstverständlich liegt es im Bereich des Erfindungsgedankens, den Hebel unmittelbar in den Verschwenkbereich des Kreuzstückes zu verschwenken und somit eine Bewegung des Wählhebels in die Rückwärtsgang-Fahrstufe "R" wirksam zu verhindern.

Eine weitere, sehr vorteilhafte Ausgestaltung des Erfindungsgedankens sieht vor, an dem Kreuzstück einen Hebelarm anzuformen, in den wenigstens zwei Ausnehmungen eingeformt sind. Unter einer Ausnehmung ist dabei vorzugsweise eine muldenartige Vertiefung in dem Hebelarm zu verstehen.
Der Anker des Elektromagneten greift im Fahrbetrieb unmittelbar in eine dieser Ausnehmungen an dem Hebelarm des Kreuzstückes ein, sodaß die Bewegung des Wählhebles aus der Fahrstufe "D" beziehungsweise "N" heraus in die Rückwärtsgang-Fahrstufe R wirksam verhindert wird. Ein Wechsel zwischen "D" und "N" ist aber weiterhin möglich. Unter Nutzung des zuvor beschriebenen Hebels wäre es ferner denkbar, diesen Hebel in den Schwenkbereich des am Kreuzstück angeformten Hebelarmes zu schwenken, sodaß die unbeabsichtigte Anwahl der Rückwärtsgang-Fahrstufe "R" verhindert wird.

Der Elektromagnet wird erfindungsgemäß durch ein am Kraftfahrzeuggetriebe erfaßtes Geschwindigkeitssignal stromlos, wenn die Geschwindigkeit des Kraftfahrzeuges kleiner oder gleich 4 km/h beträgt. In diesem Fall wird die Ausnehmung in dem Kreuzstück freigegeben, sodaß die Rückwärtsgang-Fahrstufe "R" angewählt werden kann.

Weiterhin kann bei einer erfindungsgemäßen Wählvorrichtung der Wählhebel in der Wählhebelstellung "P" durch den ausgefahrenen Anker des bestromten Elektromagneten blockiert werden. Dabei greift der Anker unmittelbar in eine weitere Ausnehmung an dem Hebelarm des Kreuzstückes ein.
Bei einer Bremsbetätigung bewirkt ein dabei erfaßtes Bremssignal über die zentrale Verarbeitungseinheit, daß der Elektromagent angesteuert wird, sodaß die Stromzufuhr desselben unterbrochen und der dadurch eingezogene Anker des Elektromagneten den Wählhebel in der Wählhebelstellung P freigibt.

Um die manuelle Schrittschaltung mit einer erfindungsgemäßen Wählvorrichtung durchführen zu können, durchsetzt der Wählhebel auch einen in der Jalousie querbeweglich geführten Schieber, der auf seiner Oberfläche befestigte Signalgeber trägt. Diese Signalgeber erzeugen an den auf der Leiterplatte zugeordneten Signalaufnehmern die Signale für den Schrittschaltbetrieb. Bei Verwendung berührungsloser Signalgeber beziehungsweise Signalaufnehmer spielen Fertigungstoleranzen zwischen den Bauteilen keine Rolle. Diese können über das Abstandsmaß zwischen Signalgebern und Signalaufnehmern ausgeglichen werden.

Bei einer Wählvorrichtung nach der vorliegenden Erfindung ist an dem Kreuzstück ferner ein Nocken angeformt, der in der Wählhebelstellung "P" mit einem um eine Achse verschwenkbaren Hebelarm zusammenwirkt, der über ein Übertragungselement eine Verbindung zu dem Zündschloss des Kraftfahrzeuges schafft, sodaß der Zündschlüssel nur in der Parkposition "P" aus dem Zündschloß abziehbar freigegeben wird.

Das bei einer elektronischen Signalabtastung fehlende Schaltgefühl des Fahrzeugführers kann beispielsweise auch im Automatikschaltbetrieb durch eine federbelastete Rastierung nach Art einer Feder-Wälzkörperraste simuliert werden, wobei der Wälzkörper zum Beispiel an dem Kreuzstück befestigt ist und an einer den Fahrstufen entsprechenden Kontur in dem Gehäuse abrollt oder umgekehrt. Der Aufbau des Rastmittels entspricht weitestgehend dem zuvor beschriebenen Konturroller.

An dem multifunktionalen Kreuzstück kann darüber hinaus eine Aufnahme für ein mechanisches Übertragungselement vorhanden sein, das beispielsweise ein Gestänge oder ein Seilzug ist. Dies wird jedoch nur erforderlich, wenn gesetzliche Regelungen eine zusätzliche mechanische Verbindung zum Kraftfahrzeuggetriebe fordern. Für die Lösung der erfindungsgemäßen technischen Problemstellung ist eine mechanische Verbindung nicht notwendig.

Bevorzugt werden bei einer erfindungsgemäßen Wählvorrichtung Signalaufnehmer und Signalgeber verwendet, die elektromagnetische Signale erzeugen beziehungsweise aufnehmen und beispielsweise Hall-Sensoren sind.

Selbstverständlich können die vorstehend genannten und die nachfolgend noch zu erläuternden Merkmale der Erfindung nicht nur in der jeweils angegebenen Kombination, sondern auch in anderen Kombinationen oder in Alleinstellung verwendet werden.

In der Zeichnung sind beispielhaft bevorzugte Ausführungsbeispiele des Erfindungsgegenstandes gezeigt. Diese werden nachfolgend beschrieben.
Es zeigen:
- **Figur 1:**: eine Schnittdarstellung einer erfindungsgemäßen Wählvorrichtung in der Wählhebelstellung "P"
- **Figur 2:**: eine Schnittdarstellung einer erfindungsgemäßen Wählvorrichtung in der Wählhebelstellung "N"
- **Figur 3:**: eine Schnittdarstellung einer erfindungsgemäßen Wählvorrichtung in der Ansicht entsprechend der Pfeilrichtung A aus Figur 2
- **Figur 4:**: eine ausschnittsweise Vergrößerung der Ansicht entsprechend der Figur 3 und
- **Figur 5:**: eine vereinfachte Darstellung einer weiteren Ausführungsform einer erfindungsgemäßen Wählvorrichtung.

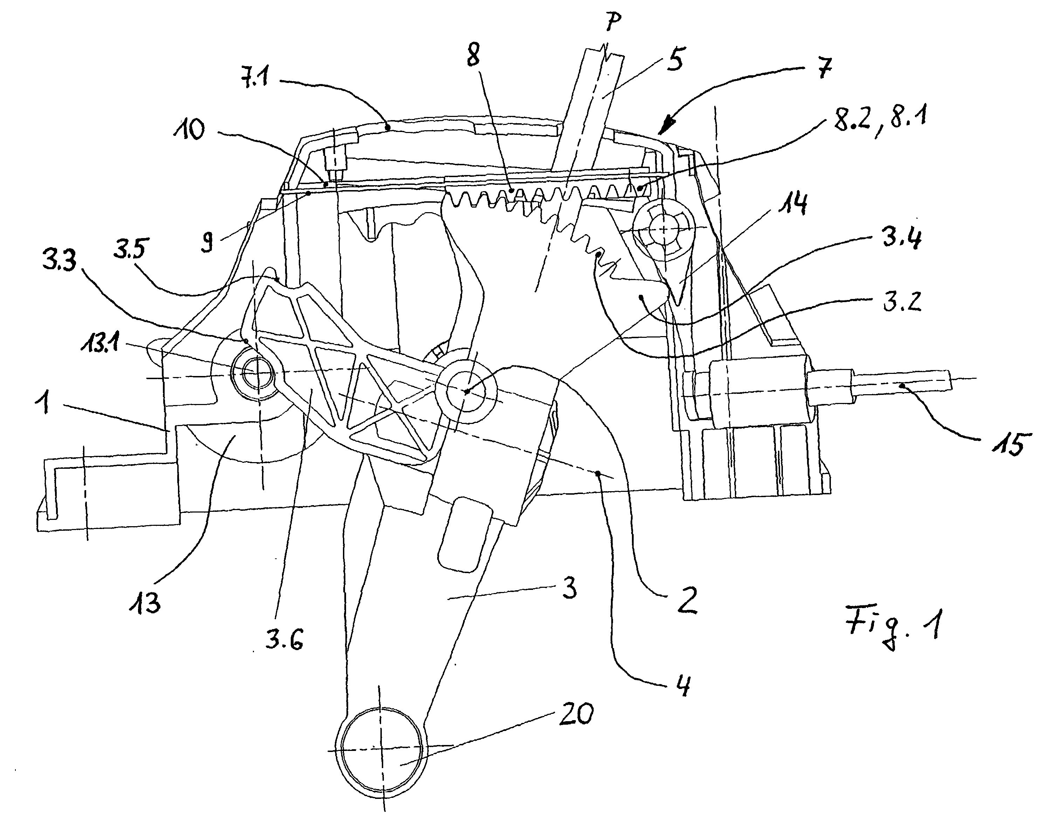

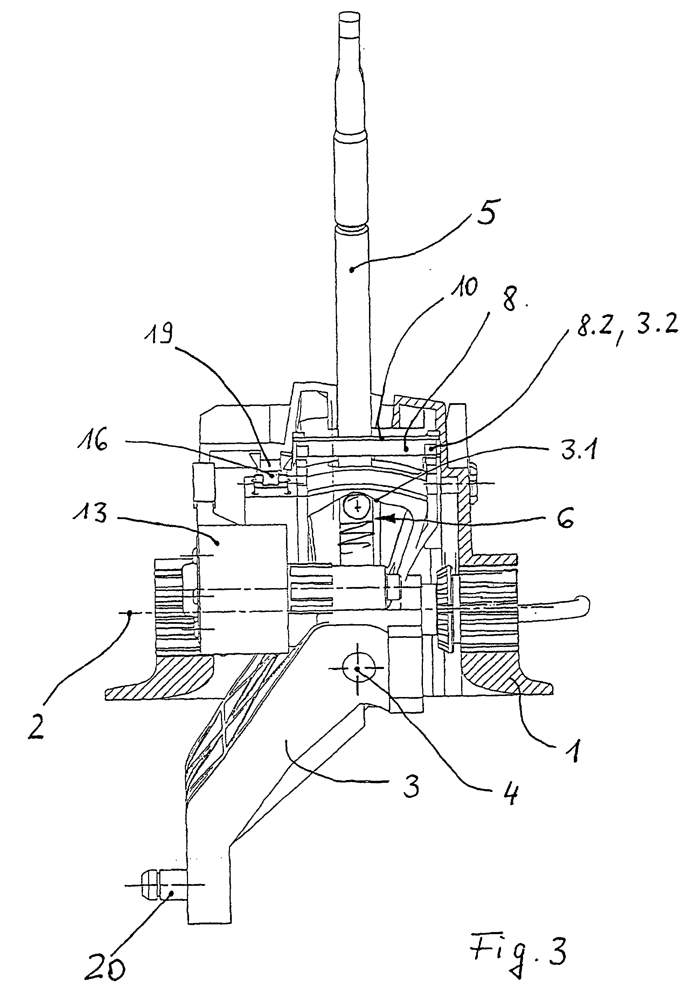

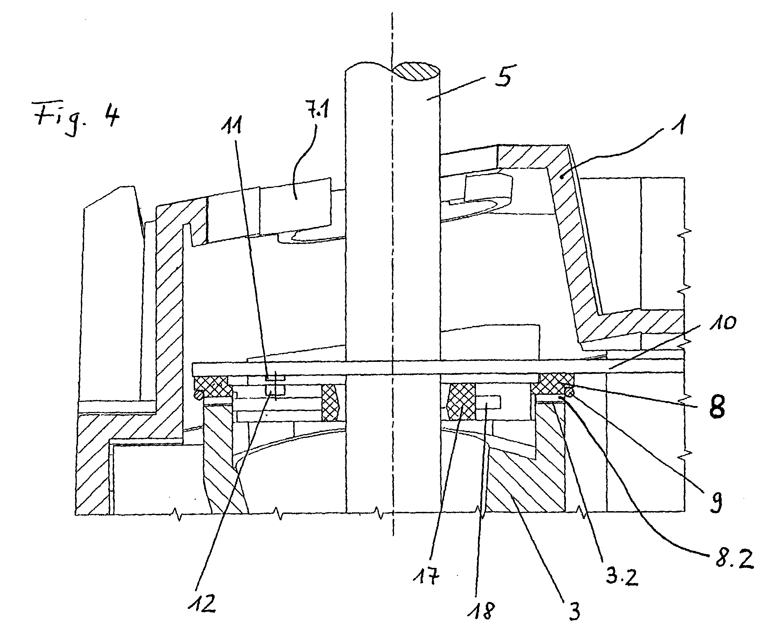

In den Figuren 1-4 ist beispielhaft eine erfindungsgemäße Wählvorrichtung für ein Automatikgetriebe eines Kraftfahrzeuges dargestellt.
Die gezeigte Wählvorrichtung für ein Automatikgetriebe von Kraftfahrzeugen besteht aus einem Gehäuse 1, sowie einem in dem Gehäuse um eine erste, annähernd in Fahrzeugquerrichtung angeordnete Achse 2 schwenkbar gelagerten, multifunktionalen Kreuzstück 3, in dem ein um eine zweite Achse 4 schwenkbar gelagerter Wählhebel 5 aufgenommen ist, wobei die Achsen annähernd orthogonal, jedoch räumlich versetzt zueinander verlaufen. Ferner weist die Wählvorrichtung eine Automatikschaltgasse auf, in der durch Verschwenken des Wählhebels um die erste Achse 2 die einzelnen Fahrstufen P, R, N, D des Automatikgetriebes anwählbar sind (Automatikschaltbetrieb)wobei wenigstens eine dieser Wählhebelstellungen eine Quergasse bildet, in der ein Verschwenken des Wählhebels um die zweite Achse 4, annähernd in Fahrzeugquerrichtung, möglich ist und durch ein manuelles, tippweises Verschwenken des Wählhebels aus einer neutralen Mittellage heraus in der einen Richtung eine Hochschaltung um einen Getriebegang und in der entgegengesetzten Richtung eine Rückschaltung um einen Getriebegang erfolgt, wobei der Wählhebel jeweils selbsttätig in seine neutrale Mittellage zurückkehrt (Schrittschaltbetrieb).

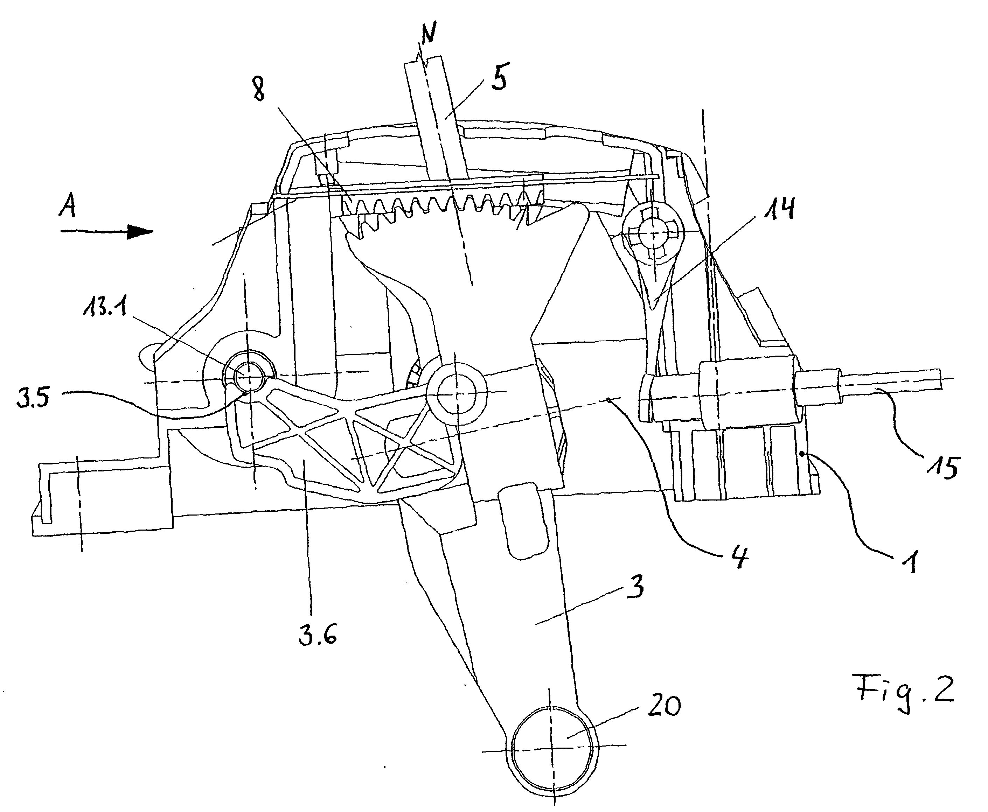

An dem Wählhebel 5 ist wenigstens ein federbelasteter Konturroller 6 vorhanden, der bei dem manuellen, tippweisen Verschwenken des Wählhebels mit einer Kontur 3.1 des Kreuzstückes 3 zusammenwirkt und so auch die Rückstellbewegung des Wählhebels in seine neutrale Mittellage unterstützt. Weiterhin ist eine federbelastete Rastierung des Kreuzstückes gegenüber dem Gehäuse vorgesehen.
Voneinander unabhängige Mittel zur permanenten Erfassung von Signalen der Geschwindigkeit des Fahrzeuges, des Bremssignales und der Wählhebelstellung geben die erfaßten Signale an eine zentrale Verarbeitungseinheit weiter, die einen Elektromagneten 13 steuert, dessen aktivierter Anker 13.1 unmittelbar in eine Ausnehmung 3.3 oder 3.5 an dem Kreuzstück 3 eingreift und somit die Anwahl bestimmter Fahrstufen blockiert. In der Darstellung der Figur 1 greift der Anker 13.1 in die Ausnehmung 3.3 eines an dem Kreuzstück 3 angeformten Hebelarmes 3.6 ein. In der Darstellung der Figur 2 greift der Anker 13.1 hingegen in die Ausnehmung 3.5 des an dem Kreuzstück 3 angeformten Hebelarmes 3.6 ein. Der Wählhebel 5 kann bei dem letztgenannten Eingriff des Ankers 13.1 zwischen den Wählhebelstellungen "N" und "D" verschwenkt werden. Eine unbeabsichtigte Anwahl der Rückwärtsgang-Fahrstufe "R" wird jedoch wirksam verhindert.
Darüber hinaus sind Mittel 3.4, 14 bzw. 15 vorhanden, die den Zündschlüssel im Zündschloß sichern. Diese bestehen aus einem an dem Kreuzstück 3 angeformten Nocken 3.4, der in der Parkposition P des Wählhebels 5 mit einem um eine Achse verschwenkbaren Hebelarm 14 zusammenwirkt, der über ein Übertragungselement 15 eine Verbindung zu dem Zündschloss des Kraftfahrzeuges schafft, sodaß der Zündschlüssel nur in der Parkposition aus dem Zündschloß abziehbar freigegeben wird.
Der Wählhebel 5 durchsetzt eine Kulisse 7.1 und wird dabei gleichzeitig von dieser Kulisse geführt. Die Kulisse ist in eine obere Gehäuseabdeckung 7 eingearbeitet. Eine Jalousie 8, die einerseits den durch die Kulisse gebildeten Schlitz abdeckt und in einer unterhalb der Gehäuseabdeckung gelegenen Führung 9 in dem Gehäuse 1 synchron mit dem Wählhebel bewegbar ist, trägt auf ihrer Oberseite 8.3 Signalgeber 12. Die Signalgeber werden an einer unterhalb der Gehäuseabdeckung angeordneten Leiterplatte 10 und darauf befestigten Signalaufnehmern berührungslos vorbei bewegt, wobei die Signalaufnehmer den jeweiligen Schaltstellungen zugeordnet sind.

In das einteilig ausgeführte Kreuzstück 3 ist im oberen, der Jalousie zugewandten Bereich eine Verzahnung 3.2 eingeformt, die mit einer auf der Unterseite 8.1 der Jalousie 8 angebrachten, komplementären Verzahnung 8.2 zusammenwirkt.
Die Automatikfahrstufen sind bei der gezeigten Ausführung in der Reihenfolge D, N, R, P angeordnet.
Der aktivierte Anker 13.1 des Elektromagneten 13 ist vorliegend ein im stromlosen Zustand eingezogener Druckanker. Der aktivierte, also bestromte Elektromagnet 13 weist demnach einen ausgefahrenen Anker 13.1 auf.
Der Elektromagnet 13 wird durch ein am Kraftfahrzeuggetriebe erfaßtes Geschwindigkeitssignal stromlos geschaltet, wenn die Geschwindigkeit des Kraftfahrzeuges kleiner oder gleich 4 km/h beträgt. Somit ist bei einer Geschwindigkeit kleiner oder gleich 4 km/h die Ausnehmung 3.5 freigegeben.
In der Wählhebelstellung "P" wird der Wählhebel durch den ausgefahrenen Anker 13.1 des bestromten Elektromagneten 13 blockiert, weil der Anker in die Ausnehmung 3.3 an dem Hebelarm 3.6 des Kreuzstückes 3 eingreift, bis bei einer Bremsbetätigung ein dabei erfaßtes Bremssignal über die zentrale Verarbeitungseinheit den Elektromagenten 13 derart steuert, daß die Stromzufuhr desselben unterbrochen wird und der eingezogene Anker 13.1 des Elektromagneten 13 den Wählhebel in der Wählhebelstellung "P" wieder freigibt.

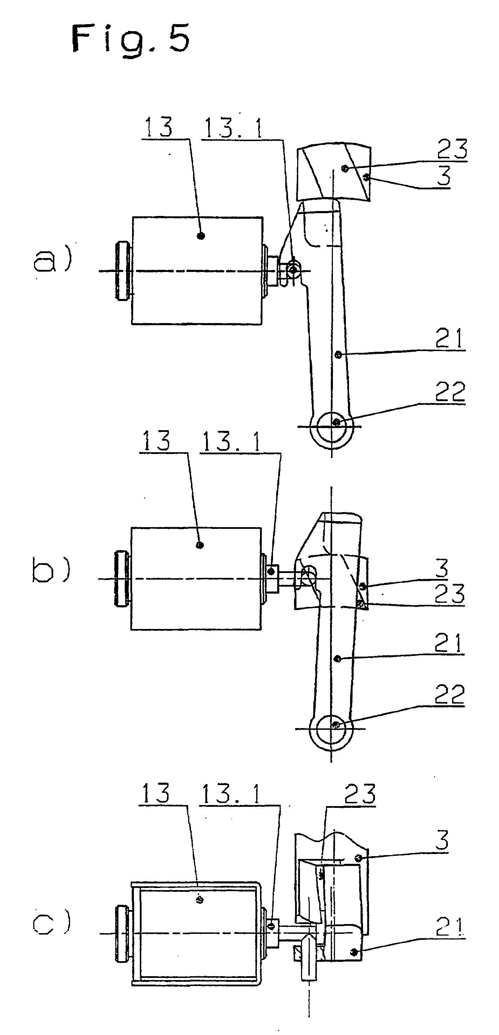

In der **Figur 5** ist eine weitere vorteilhafte Ausführung einer erfindungsgemäßen Wählvorrichtung für ein Automatikgetriebe von Kraftfahrzeugen dargestellt, bei der der aktivierte Anker 13.1 des Elektromagneten 13 ein im bestromten Zustand eingezogener Zuganker ist. Das bedeutet, der Anker wird bei Unterbrechung der Stromzufuhr ausgefahren.
Zur Verhinderung der unbeabsichtigten Anwahl der Rückwärtsgang-Fahrstufe "R" ist der Elektromagnet 13 während des Fahrbetriebes aktiviert und der federbelastete, entgegen der Druckkraft einer Feder eingezogene Anker 13.1 wirkt mit einer Hebelmechanik zusammen. Der Anker betätigt einen um eine Achse 22 verschwenkbaren Hebel 21, der in den Fahrstufen "N" und "D" eine Ausnehmung 23 des Kreuzstückes 3 durchgreift und mit einem hakenförmigen Abschnitt das Kreuzstück 3 in einer Richtung festlegt. Somit kann der Wählhebel zwar weiterhin zwischen den Wählhebelstellungen "N" und "D" verschwenkt werden, ein unbeabsichtigtes Einlegen der Rückwärtsgang-Fahrstufe "R" wird jedoch wirksam verhindert.

Bei einer in den Figuren dargestellten Wählvorrichtung für ein Automatikgetriebe von Kraftfahrzeugen durchsetzt der Wählhebel 5 auch einen in der Jalousie 8 querbeweglich geführten Schieber 17, der auf seiner Oberfläche befestigte Signalgeber 12 trägt, die an den zugeordneten Signalaufnehmern 11 an der Leiterplatte 10 die Signale zur Erfassung des Schrittschaltbetriebes des Wählhebels 5, also der Bewegung des Wählhebels annähernd in Fahrzeugquerrichtung, erzeugen.
An dem Kreuzstück 3 ist ferner eine Aufnahme 20 für ein mechanisches Übertragungselement vorhanden ist, das beispielsweise ein Gestänge oder ein Seilzug sein kann.

### Bezugszeichenliste

- 1: Gehäuse
- 2: erste Achse
- 3: Kreuzstück
- 3.1: Kontur
- 3.2: Verzahnung
- 3.3: Ausnehmung
- 3.4: Nocken
- 3.5: Ausnehmung
- 3.6: Hebelarm
- 4: zweite Achse
- 5: Wählhebel
- 6: Konturroller
- 7: Gehäuseabdeckung
- 7.1: Kulisse
- 8: Jalousie
- 8.1: Unterseite
- 8.2: Verzahnung
- 8.3: Oberseite
- 9: Führung
- 10: Leiterplatte
- 11: Signalaufnehmer
- 12: Signalgeber
- 13: Elektromagnet
- 13.1: Anker
- 14: Hebelarm
- 15: Übertragungselement
- 16: Rastierung
- 17: Schieber
- 18: Führungsschiene
- 19: Kontur
- 20: Aufnahme
- 21: Hebel
- 22: Stahlbolzen
- 23: Ausnehmung

## Patentansprüche

1. Wählvorrichtung für ein Automatikgetriebe von Kraftfahrzeugen bestehend aus:
- einem Gehäuse (1),
- einem in dem Gehäuse um eine erste, annähernd in Fahrzeugquerrichtung angeordnete Achse (2) schwenkbar gelagerten, multifunktionalen Kreuzstück (3), in dem ein um eine zweite Achse (4) schwenkbar gelagerter Wählhebel (5) aufgenommen ist, wobei die Achsen annähernd orthogonal, jedoch räumlich versetzt zueinander angeordnet sind,
- einer Automatikschaltgasse, in der durch Verschwenken des Wählhebels um die erste Achse (2) die einzelnen Fahrstufen (P, R, N, D) des Automatikgetriebes anwählbar sind, wobei wenigstens eine dieser Wählhebelstellungen eine Quergasse bildet, in der ein Verschwenken des Wählhebels um die zweite Achse (4), annähernd in Fahrzeugquerrichtung, möglich ist und durch ein manuelles, tippweises Verschwenken des Wählhebels aus einer neutralen Mittellage heraus in der einen Richtung eine Hochschaltung um einen Getriebegang und in der entgegengesetzten Richtung eine Rückschaltung um einen Getriebegang erfolgt, wobei der Wählhebel jeweils selbsttätig in seine neutrale Mittellage zurückkehrt,
- wenigstens einem federbelasteten Konturroller (6) an dem Wählhebel (5), der bei dem manuellen, tippweisen Verschwenken des Wählhebels mit einer Kontur (3.1) des Kreuzstückes (3) zusammenwirkt,
**dadurch gekennzeichnet, daß** die Wählvorrichtung ferner besteht aus:
- voneinander unabhängigen Mitteln zur permanenten Erfassung von Signalen der Geschwindigkeit des Fahrzeuges, des Bremssignales und der Wählhebelstellung, wobei die Signale an eine zentrale Verarbeitungseinheit weitergegeben werden, die einen Elektromagneten (13) steuert, dessen aktivierter Anker (13.1) unmittelbar oder mittelbar in eine Ausnehmung (3.3 oder 3.5) an dem Kreuzstück (3) eingreift und somit die Anwahl bestimmter Fahrstufen blockiert,
- Mitteln (3.4, 14 bzw. 15), die unmittelbar oder mittelbar den Zündschlüssel im Zündschloß sichern,
- einer den Wählhebel führenden und von diesem durchsetzten Kulisse (7.1), die unterhalb einer oberen Gehäuseabdeckung (7) angebracht oder in diese eingearbeitet ist,
- einer Jalousie (8), die einerseits den durch die Kulisse gebildeten Schlitz abdeckt und in einer unterhalb der Gehäuseabdeckung gelegenen Führung (9) in dem Gehäuse (1) synchron zu dem Wählhebel bewegbar ist,
- einer in das einteilig ausgeführte Kreuzstück (3) eingeformten Verzahnung (3.2), die mit einer auf der Unterseite (8.1) der Jalousie (8) angebrachten, komplementären Verzahnung (8.2) zusammenwirkt,
- einer unterhalb der Gehäuseabdeckung angeordneten Leiterplatte (10) mit den jeweiligen Schaltstellungen zugeordneten Signalaufnehmern (11), unter denen die mit dem Wählhebel (5) berührungslos an den Signalaufnehmern vorbei bewegbaren, auf der Oberseite (8.3) der Jalousie (8) angeordneten, Signalgeber (12) entlanggeführt sind.

2. Wählvorrichtung für ein Automatikgetriebe von Kraftfahrzeugen nach Anspruch 1,
**dadurch gekennzeichnet, daß**
die Automatikfahrstufen in der Reihenfolge D, N, R, P angeordnet sind.

3. Wählvorrichtung für ein Automatikgetriebe von Kraftfahrzeugen nach Anspruch 2,
**dadurch gekennzeichnet, daß**
der aktivierte Anker (13.1) des Elektromagneten (13) ein im stromlosen Zustand eingezogener Druckanker ist.

4. Wählvorrichtung für ein Automatikgetriebe von Kraftfahrzeugen nach Anspruch 2,
**dadurch gekennzeichnet, daß**
der aktivierte Anker (13.1) des Elektromagneten (13) ein im bestromten Zustand eingezogener Zuganker ist.

5. Wählvorrichtung für ein Automatikgetriebe von Kraftfahrzeugen nach Anspruch 4,
**dadurch gekennzeichnet, daß**
zur Verhinderung der unbeabsichtigten Anwahl der Rückwärtsgang-Fahrstufe R der Elektromagnet (13) während des Fahrbetriebes aktiviert ist und der federbelastete, entgegen der Druckkraft einer Feder eingezogene Anker (13.1) mit einer Hebelmechanik zusammenwirkt, wobei der Anker einen um eine Achse (22) verschwenkbaren Hebel (21) betätigt, der in den Fahrstufen N und D eine Ausnehmung (23) des Kreuzstückes (3) durchgreift und mit einem hakenförmigen Abschnitt das Kreuzstück (3) festlegt.

6. Wählvorrichtung für ein Automatikgetriebe von Kraftfahrzeugen nach Anspruch 3,
**dadurch gekennzeichnet, daß**
der Elektromagnet (13) mit seinem Anker (13.1) im Fahrbetrieb in eine Ausnehmung (3.5) an dem Hebelarm (3.6) des Kreuzstückes (3) eingreift und somit die Bewegung des Wählhebles aus der Fahrstufe N heraus in die Rückwärtsgang-Fahrstufe R verhindert, wobei der Elektromagnet (13) durch ein am Kraftfahrzeuggetriebe erfaßtes Geschwindigkeitssignal stromlos wird, wenn die Geschwindigkeit des Kraftfahrzeuges kleiner oder gleich 4 km/h beträgt und somit die Ausnehmung (3.5) freigibt.

7. Wählvorrichtung für ein Automatikgetriebe von Kraftfahrzeugen nach Anspruch 6,
**dadurch gekennzeichnet, daß**
der Wählhebel in der Wählhebelstellung P durch den ausgefahrenen Anker (13.1) des bestromten Elektromagneten (13) blockiert ist, der in eine Ausnehmung (3.3) an dem Hebelarm (3.6) des Kreuzstückes (3) eingreift, bis bei einer Bremsbetätigung ein dabei erfaßtes Bremssignal über die zentrale Verarbeitungseinheit den Elektromagenten (13) steuert, sodaß die Stromzufuhr desselben unterbrochen wird und der eingezogene Anker (13.1) des Elektromagneten (13) somit den Wählhebel in der Wählhebelstellung P freigibt.

8. Wählvorrichtung für ein Automatikgetriebe von Kraftfahrzeugen nach einem der vorhergehenden Ansprüche,
**dadurch gekennzeichnet, daß**
der Wählhebel (5) auch einen in der Jalousie (8) querbeweglich geführten Schieber (17) durchsetzt, der auf seiner Oberfläche befestigte Signalgeber (12) trägt, die an den zugeordneten Signalaufnehmern (11) an der Leiterplatte (10) die Signale zur Erfassung des Schrittschaltbetriebes des Wählhebels (5) erzeugen.

9. Wählvorrichtung für ein Automatikgetriebe von Kraftfahrzeugen nach einem der vorhergehenden Ansprüche,
**dadurch gekennzeichnet, daß**
die Mittel, die mit dem Zündschlüssel (3.4) in den jeweils dafür vorgesehenen Wählhebelstellungen zusammenwirken, aus einem an dem Kreuzstück (3) angeformten Nocken (3.4) bestehen, der in der Parkposition (P) des Wählhebels (5) mit einem um eine Achse verschwenkbaren Hebelarm (14) zusammenwirkt, der über ein Übertragungselement (15) eine Verbindung zu dem Zündschloss des Kraftfahrzeuges schafft, sodaß der Zündschlüssel nur in der Parkposition aus dem Zündschloß abziehbar freigegeben wird.

10. Wählvorrichtung für ein Automatikgetriebe von Kraftfahrzeugen nach einem der vorhergehenden Ansprüche,
**dadurch gekennzeichnet, daß**
eine federbelastete Rastierung (16) nach Art einer Feder-Wälzkörperraste an dem Kreuzstück (3) mit einer den Fahrstufen entsprechenden Kontur (19) in dem Gehäuse (1) zusammenwirkt.

11. Wählvorrichtung für ein Automatikgetriebe von Kraftfahrzeugen nach einem der vorhergehenden Ansprüche,
die Signalaufnehmer (11) und die Signalgeber (12) elektromagnetische Signale erzeugen beziehungsweise aufnehmen und die Signalaufnehmer (11) beispielsweise Hall-Sensoren sind.

12. Wählvorrichtung für ein Automatikgetriebe von Kraftfahrzeugen nach einem der vorhergehenden Ansprüche,
**dadurch gekennzeichnet, daß**
die Signalaufnehmer (11) und die Signalgeber (12) optische Signale erzeugen beziehungsweise aufnehmen und die Signalaufnehmer (11) beispielsweise Opto-Sensoren sind.

## Claims

1. Selecting device for an automatic transmission of motor vehicles comprising:
- a housing (1),
- a multifunctional crosspiece (3), which is supported in the housing pivotally about a first axis (2) disposed approximately in vehicle transverse direction and which accommodates a selector lever (5) supported pivotally about a second axis (4), wherein the axes are disposed approximately orthogonally but spatially offset relative to one another,
- an automatic shift lane, in which by swivelling the selector lever about the first axis (2) the individual driving stages (P, R, N, D) of the automatic transmission are selectable, wherein at least one of said selector lever positions forms a transverse lane, in which a swivelling of the selector lever about the second axis (4), approximately in vehicle transverse direction, is possible and through manual, jog-like swivelling of the selector lever out of a neutral central position in the one direction an upshift by one gear speed and in the opposite direction a downshift by one gear speed is effected, wherein the selector lever in each case returns automatically into its neutral central position,
- at least one spring-loaded contour roller (6) on the selector lever (5), which contour roller during the manual jog-like swivelling of the selector lever cooperates with a contour (3.1) of the crosspiece (3),
**characterized in that** the selecting device further comprises:
- mutually independent means of permanently acquiring signals of the vehicle speed, brake signal and selector lever position, wherein the signals are relayed to a central processing unit, which controls an electromagnet (13), the activated armature (13.1) of which engages directly or indirectly into a recess (3.3 or 3.5) in the crosspiece (3) and hence blocks the selection of specific driving stages,
- means (3.4, 14 and/or 15) of directly or indirectly securing the ignition key in the ignition lock,
- a gate (7.1), which guides and is penetrated by the selector lever and which is attached below or incorporated in an upper housing cover (7),
- a shutter (8), which on the one hand covers the slot formed by the gate and is movable synchronously with the selector lever in the housing (1) in a guide (9) situated below the housing cover,
- a gearing (3.2), which is formed in the integrally constructed crosspiece (3) and cooperates with a complementary gearing (8.2) provided at the underside (8.1) of the shutter (8),
- a printed-circuit board (10), which is disposed below the housing cover and has signal pickups (11), which are associated with the respective shift positions and below and along which the signal generators (12) are conveyed, which are disposed on the top (8.3) of the shutter (8) and are movable with the selector lever (5) contactlessly past the signal pickups.

2. Selecting device for an automatic transmission of motor vehicles according to claim 1,
**characterized in that**
the automatic driving stages are arranged in the order D, N, R, P.

3. Selecting device for an automatic transmission of motor vehicles according to claim 2,
**characterized in that**
the activated armature (13.1) of the electromagnet (13) is a push-type armature, which is retracted in the de-energized state.

4. Selecting device for an automatic transmission of motor vehicles according to claim 2,
**characterized in that**
the activated armature (13.1) of the electromagnet (13) is a pull-type armature, which is retracted in the energized state.

5. Selecting device for an automatic transmission of motor vehicles according to claim 4,
**characterized in that**
to prevent unintentional selection of the reverse gear driving stage R the electromagnet (13) during travel is activated and the spring-loaded armature (13.1), which is retracted counter to the force of pressure of a spring, cooperates with a lever mechanism, wherein the armature actuates a lever (21), which is capable of swivelling about an axis (22) and which in the driving stages N and D engages through a recess (23) of the crosspiece (3) and with a hook-shaped portion fixes the crosspiece (3).

6. Selecting device for an automatic transmission of motor vehicles according to claim 3,
**characterized in that**
the electromagnet (13) during travel engages with its armature (13.1) into a recess (3.5) in the lever arm (3.6) of the crosspiece (3) and hence prevents the selector lever from moving out of the driving stage N into the reverse gear driving stage R, wherein the electromagnet (13) is de-energized by means of a speed signal acquired at the motor vehicle transmission when the speed of the motor vehicle is lower than or equal to 4 kph and hence clears the recess (3.5).

7. Selecting device for an automatic transmission of motor vehicles according to claim 6,
**characterized in that**
the selector lever is blocked in the selector lever position P by the extended armature (13.1) of the energized electromagnet (13), which engages into a recess (3.3) in the lever arm (3.6) of the crosspiece (3) until, upon a braking operation, a then acquired brake signal via the central processing unit controls the electromagnet (13) so that the current supply of the latter is interrupted and the retracted armature (13.1) of the electromagnet (13) therefore releases the selector lever in the selector lever position P.

8. Selecting device for an automatic transmission of motor vehicles according to one of the preceding claims,
**characterized in that**
the selector lever (5) also penetrates a slide (17), which is guided in a transversely movable manner in the shutter (8) and which carries, fastened on its surface, signal generators (12), which at the associated signal pickups (11) on the printed-circuit board (10) generate the signals for acquiring the sequential shift operation of the selector lever (5).

9. Selecting device for an automatic transmission of motor vehicles according to one of the preceding claims,
**characterized in that**
the means, which cooperate with the ignition key (3.4) in the selector lever positions provided in each case for said purpose, comprise a cam (3.4), which is formed on the crosspiece (3) and in the parking position (P) of the selector lever (5) cooperates with a lever arm (14), which is capable of swivelling about an axis and via a transmission element (15) establishes a connection with the ignition lock of the motor vehicle, so that only in the parking position is the ignition key released so as to be removable from the ignition lock.

10. Selecting device for an automatic transmission of motor vehicles according to one of the preceding claims,
**characterized in that**
a spring-loaded latching device (16) in the manner of a spring/rolling body catch on the crosspiece (3) cooperates with a contour (19), which corresponds to the driving stages, in the housing (1).

11. Selecting device for an automatic transmission of motor vehicles according to one of the preceding claims,
**characterized in that**
the signal pickups (11) and the signal generators (12) generate and/or pick up electromagnetic signals and the signal pickups (11) are, for example, Hall-effect sensors.

12. Selecting device for an automatic transmission of motor vehicles according to one of the preceding claims,
**characterized in that**
the signal pickups (11) and the signal generators (12) generate and/or pick up optical signals and the signal pickups (11) are, for example, optical sensors.

## Revendications

1. Dispositif de sélection pour une transmission automatique de véhicule automobile constitué de
- un boîtier (1),
- un croisillon (3) multifonctionnel, monté de manière à pouvoir pivoter autour d'un premier axe (2), disposé approximativement dans la direction transversale du véhicule, lequel croisillon reçoit un levier de sélection (5) monté de manière à pouvoir pivoter autour d'un deuxième axe (4), les axes étant disposés approximativement orthogonalement, mais décalés l'un par rapport à l'autre dans l'espace,
- une voie de commutation automatique dans laquelle, par pivotement du levier de sélection autour du premier axe (2), on peut sélectionner les différents crans de marche P,R,N,D de la transmission automatique, l'une au moins de ces positions du levier de sélection formant une voie transversale dans laquelle un pivotement du levier de sélection autour du deuxième axe (4), approximativement dans la direction transversale du véhicule, est possible et dans laquelle, par un pivotement manuel par impulsions, du levier de sélection, on passe, depuis une position centrale neutre, dans un sens au rapport supérieur, et dans le sens opposé on rétrograde d'un rapport, le levier de sélection se replaçant dans chaque cas automatiquement dans sa position centrale neutre,
- au moins un galet de contour (6), soumis à l'action d'un ressort, sur le levier de sélection (5), qui coopère avec un contour (3.1) du croisillon (3), pendant le pivotement manuel, par impulsions, du levier de sélection,
**caractérisé en ce que** le dispositif de sélection est constitué en outre :
- de moyens indépendants les uns des autres pour la détection permanente de signaux de la vitesse du véhicule, du signal de freinage et de la position du levier de sélection, les signaux étant transmis à une unité centrale de traitement qui commandent un électroaimant (13) dont l'induit (13.1) activé s'engage, directement ou indirectement, dans un évidement (3.3) ou (3.5) du croisillon (3), et bloque ainsi la sélection de crans de marche déterminés,
- de moyens (3.4, 14 ou 15) qui bloquent directement ou indirectement la clé de contact dans la serrure de contact,
- une coulisse (7.1) guidant le levier de sélection et traversée par celui-ci, qui est placée au-dessous d'un capot supérieur (7) du boîtier ou est ménagée dans celui-ci,
- une jalousie (8) qui d'une part recouvre la fente formée par la coulisse et qui est déplaçable dans un guide (9) situé au-dessous du capot du boîtier, dans le boîtier (1), de manière synchrone avec le levier de sélection,
- une denture (3.2) formée dans le croisillon (3) réalisé d'un seul tenant, qui coopère avec une denture (8.2) complémentaire, placée sur le côté inférieur (8.1) de la jalousie (8),
- une plaquette à circuits imprimés (10), disposée au-dessous du capot du boîtier, avec des récepteurs de signaux (11) affectés aux positions de commutation respectives, au-dessous desquels sont guidés les capteurs de signaux (12) disposés sur le côté supérieur (8.3) de la jalousie (8), déplaçables avec le levier de sélection (5) sans contact, devant les capteurs de signaux.

2. Dispositif de sélection pour une transmission automatique de véhicule automobile selon la revendication 1, **caractérisé en ce que** les crans de marche de la transmission automatique sont disposés dans l'ordre D, N, R, P.

3. Dispositif de sélection pour une transmission automatique de véhicule automobile selon la revendication 2, **caractérisé en ce que** l'induit (13.1) activé de l'électro-aimant (13) est un induit de pression qui est rentré à l'état non parcouru par un courant.

4. Dispositif de sélection pour une transmission automatique de véhicule automobile selon la revendication 2, **caractérisé en ce que** l'induit (13.1) activé de l'électro-aimant (13) est un induit de traction qui est rentré à l'état parcouru par un courant.

5. Dispositif de sélection pour une transmission automatique de véhicule automobile selon la revendication 4, **caractérisé en ce que** pour empêcher la sélection involontaire du cran R de marche arrière, l'électro-aimant (13) est activé pendant la marche et l'induit (13.1) soumis à l'action d'un ressort, rentré à l'encontre de la force de pression d'un ressort, coopère avec un mécanisme à levier, l'induit actionnant un levier (21) qui peut pivoter autour d'un axe (22) et qui, dans les crans de marche N et D, traverse un évidement (23) du croisillon (3) et fixe le croisillon (3), par une partie en forme de crochet.

6. Dispositif de sélection pour une transmission automatique de véhicule automobile selon la revendication 3, **caractérisé en ce qu'**avec son induit (13.1), l'électro-aimant (13) s'engage, pendant la marche, dans un évidement (3.5) du bras de levier (3.6) du croisillon (3), et empêche ainsi le déplacement du levier de sélection depuis le cran de marche N dans le cran de marche arrière R, l'électro-aimant (13) n'étant plus parcouru par un courant, du'fait d'un signal de vitesse détecté sur la transmission du véhicule, lorsque la vitesse de celui-ci est inférieure ou égale à 4 km/h, et dégage donc l'évidement (3.5).

7. Dispositif de sélection pour une transmission automatique de véhicule automobile selon la revendication 6, **caractérisé en ce que** dans sa position P, le levier de sélection est bloqué par l'induit (13.1) extrait de l'électro-aimant (13) parcouru par un courant, qui s'engage dans un évidement (3.3) du bras de levier (3.6) du croisillon (3), jusqu'à ce que dans le cas d'un actionnement du frein, un signal de freinage détecté alors commande l'électro-aimant (13), à travers l'unité centrale de traitement, ce qui fait que son alimentation en courant est interrompue et que l'induit (13.1) rentré de l'électro-aimant (13) libère ainsi le levier de sélection dans sa position P.

8. Dispositif de sélection pour une transmission automatique de véhicule automobile selon l'une des revendications précédentes, **caractérisé en ce que** le levier de sélection (5) traverse aussi un coulisseau (17), guidé déplaçable transversalement dans la jalousie (8) et qui porte des capteurs de signaux (12) fixés sur sa surface supéprieure, qui produisent, sur les capteurs de signaux (11) associés de la plaquette à circuits imprimés (10), les signaux de détection du mode de commutation pas à pas du levier de sélection (5).

9. Dispositif de sélection pour une transmission automatique de véhicule automobile selon l'une des revendications précédentes, **caractérisé en ce que** les moyens, qui coopèrent avec la clé de contact (3.4) dans les positions respectivement prévues pour cela du levier de sélection, sont constitués d'une came (3.4), formée sur le croisillon (3), qui, en position de parking P du levier de sélection (5), coopère avec un bras de levier (14) qui peut pivoter autour d'un axe et qui, par l'intermédiaire d'un élément de transmission (15), réalise une liaison avec la serrure de contact du véhicule automobile, ce qui fait que la clé de contact n'est libérée, pour être extraite de la serrure de contact, que dans la position de parking .

10. Dispositif de sélection pour une transmission automatique de véhicule automobile selon l'une des revendications précédentes, **caractérisé en ce qu'**un dispositif d'arrêt (16) soumis à l'action d'un ressort, du type d'un cran d'arrêt à ressort et corps de roulement sur le croisillon (3), coopère avec un contour (19) correspondant aux crans de marche, dans le boîtier (1).

11. Dispositif de sélection pour une transmission automatique de véhicule automobile selon l'une des revendications précédentes, **caractérisé en ce que** les récepteurs de signaux (11) et les transducteurs de signaux (12) produisent ou reçoivent des signaux électromagnétiques, et les récepteurs de signaux (11) sont par exemple des capteurs à effet Hall.

12. Dispositif de sélection pour une transmission automatique de véhicule automobile selon l'une des revendications précédentes, **caractérisé en ce que** les récepteurs de signaux (11) et les transducteurs de signaux (12) produisent ou reçoivent des signaux optiques, et les récepteurs de signaux (11) sont par exemple des capteurs optiques.
